# EUROPEAN PATENT APPLICATION

(11) **EP 1 029 636 A2**
(43) Date of publication of application: **23.08.2000**
(21) Application number: 00300864.6
(22) Date of filing: 03.02.2000
(51) Int. Cl.: B25B 27/00

(54) **Clinching apparatus**

(30) Priority: 18.02.1999 GB 9903780
(71) Applicant: THE STANDARD PRODUCTS COMPANY, Cleveland Ohio 44102 (US)
(72) Inventor: Harris, David Strachan, Peterborough PE2 6YT (GB)
(74) Representative: Nash, David Allan

(57) **Abstract**

There is disclosed a clinching device comprising:-
two rotatable clinching rolls (6 and 7) capable of acting on opposite sides of a body (A, B) located between the two rolls;
means (8) for causing rotation of at least one of the two rolls; and
abutment means (10) capable of being urged against the body, in a direction generally parallel to the axes of rotation of the two rolls;
wherein the device also includes air-release means (22) by which air under pressure (21) is releasable in the region of the abutment means (10) to provide in use an air cushion (23) between the abutment means and the body.

## Description

This invention relates to a clinching apparatus, particularly but not exclusively an apparatus suitable for clinching a channel-shaped seal onto a flange, particularly as used in the automobile industry.

Seals can be made of a metal-reinforced rubber and/or plastics material, and often have a channel-shaped support portion with projecting sealing limbs. For ease of fitting, the seals may be manufactured with the side walls of the channel slightly splayed apart. After the seal is located on the flange, the seal is then secured to the flange by clinching the support portion of the seal onto the flange using a suitable tool. This is well known, and various styles of clinching apparatus have been devised and are available.

One known clinching apparatus is that disclosed in EP-0818278-A. The apparatus disclosed in that European application has two rotatable spindles carried by two housings capable of pivotable movement with respect to each other, and generally speaking these types of clinching apparatus have a single housing or two pivotal housings, and many are provided with means for pressing down part of the seal onto the flange. Typically the part of the seal which is pressed down in use is the so-called base of the channel (between the opposing side walls of the channel), or else a sealing component located adjacent that base.

In the case of EP-0818278-A the clinching apparatus includes a lever which is used to control the moving apart, and the bringing together, of the two pivotal housings (and hence the rotatable spindles carried within those housings), and a lower region of the lever is formed as a smooth pressing down zone intended to act on the base of the seal or any sealing component located adjacent to the base of the seal.

Other known types of clinching apparatus rely on a smooth part of the housing, or pair of housings, to serve as the pressing down area.

Many of the clinching apparatuses, such as that disclosed in EP-0818278-A, act efficiently during use when a seal is being clinched to a flange or the like. As is well known, the main clinching action is usually transmitted by two rotatable rollers carried by rotating spindles mounted within the housing or housings, and these can move reasonably smoothly along the outside surfaces of the opposing side walls of the channel, but some moderate resistance can be encountered where the pressing down zone of the housing, or housings, or lever, acts on the base of the channel.

According to the present invention, there is provided a clinching device comprising:-
two rotatable clinching rolls capable of acting on opposite sides of a body located between the two rolls;
means for causing rotation of at least one of the two rolls; and
abutment means capable of being urged against the body, in a direction generally parallel to the axes of rotation of the two rolls;
wherein the device also includes air-release means by which air under pressure is releasable in the region of the abutment means to provide in use an air cushion between the abutment means and the body.

The clinching rolls can be of the fixed variety (where the distance between the axes of rotation is fixed) or, preferably, are of the variable variety (for example of the type disclosed in EP-0818278-A).

Where the clinching rolls are of the variable variety, the clinching device of the present invention preferably includes means tending to urge the two rolls towards each other, and the abutment means then acts in a direction generally perpendicular to a line along which the two rolls can be urged towards each other.

Generally speaking, but not necessarily, the body is a seal of the type already described. Also, the abutment means may be a lower region of the lever (for example of the type already mentioned) or may be a lower region of the housing or pair of housings. Furthermore, the abutment means may be any other form of "pressing down zone" such as a "skate".

Many clinching apparatuses of the type used in the automotive industry for clinching seals to flanges are hand held and the means for rotating the two rolls is an air-powered motor. Thus it is well known that the clinching apparatus is often associated with a compressed air line which conveys compressed air to an air motor, often present in a so-called nutrunner, which enables a suitable drive system within the housing or housings to impart the necessary rotation to the rolls. In practice, air under a considerable pressure is employed, for example a pressure of the order of 100 pounds per square inch.

In the clinching apparatus of the present invention, part of the air supplied under pressure to the means for rotating the rolls can be taken off and led to the abutment means and allowed to escape in the region of the abutment means in a manner such as to provide the desired air cushion.

Conveniently, but not necessarily, the compressed air which is led off is allowed to escape through suitable orifices in the abutment means. Such orifices could take the form of a single aperture extending from a hollow interior of the abutment means, or could take the form of a plurality of such apertures. Alternatively, the orifice could take the form of an air knife in which air is expelled in a form similar to that of a blade.

Another possibility is that wherein part of the abutment means has a porous surface or is provided with a porous insert. The porous surface region or porous insert could take the form of a sintered body. Other means of providing the air to create the air cushion are within the scope of the present invention and the aforementioned arrangements are merely examples of suitable arrangements.

In certain arrangements it may be possible for the so-called exhaust air which has passed through the air motor used for powering the spindles and rolls to be used in the creation of the air cushion. However, as the pressure of the exhaust air might only be 20% of that of the main air supply fed to the motor, an insufficient pressure may be available for creating an adequate air cushion and, for that reason, it is preferred to employ air led off from the main supply being fed to the air motor.

For a better understanding of the present invention, and to show how the same may be carried into effect, reference will now be made, by way of example, to the accompanying drawings, in which:
Figure 1 is a front elevation of a known clinching apparatus of the type disclosed in EP-0818278-A;
Figure 2 is a side view of the apparatus of Figure 1 taken along the line II-II in Figure 1;
Figure 3 is a side view of a clinching apparatus similar to that illustrated on Figures 1 and 2 but modified to be in accordance with the present invention by the provision of means for creating an air cushion;
Figure 4 is a front view of the whole apparatus shown in Figure 3;
Figure 5 is a view similar to that in Figure 3, but on an enlarged scale, and showing in more detail the means for providing the air cushion;
Figure 6 is a front view of the apparatus shown in Figure 5;
Figure 7 shows, on an enhanced scale, a modification of the apparatus shown in Figure 5 in which the skate region of the lever incorporates a porous insert;
Figure 8 is a front view and section through the apparatus of Figure 7;
Figure 9 is a front view of slightly modified clinching apparatus in accordance with the present invention;
Figure 10 is a view, on an enlarged scale, of part of the apparatus shown in Figure 9;
Figure 11 is a view taken at right angles to that of Figure 10 of the same apparatus; and
Figure 12 is a front view of an alternative embodiment of apparatus in accordance with the present invention.

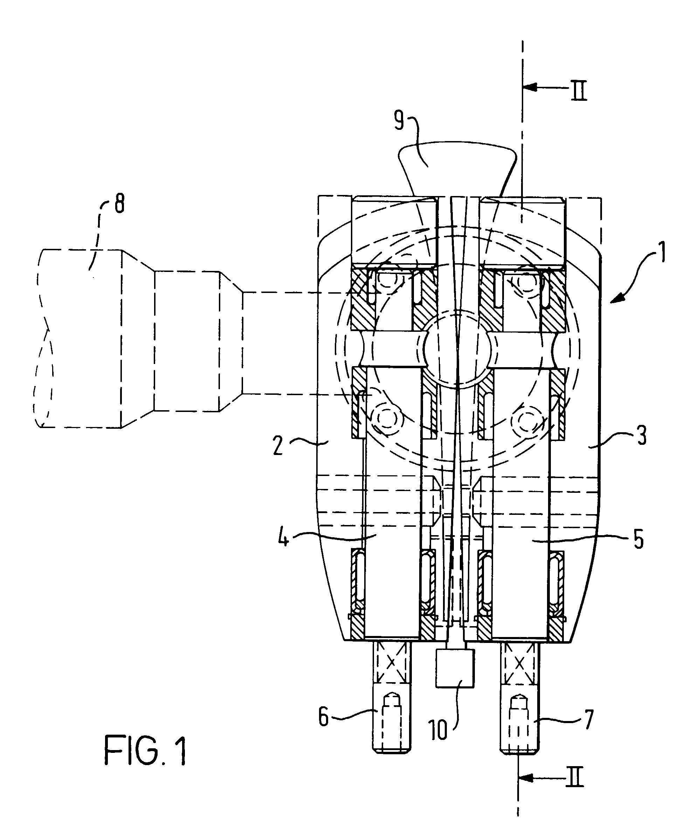

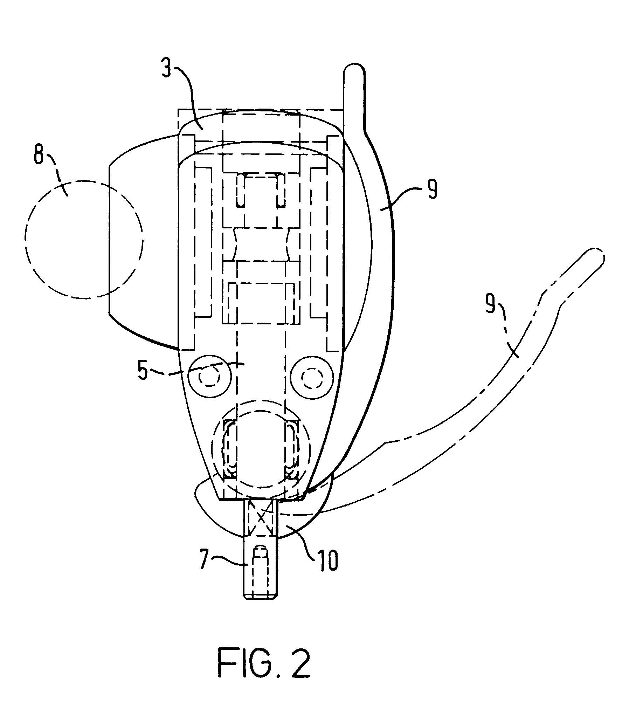

Referring firstly to the known arrangement as shown in Figures 1 and 2, the clincher 1 has first and second housing 2 and 3 in pivotal relationship, those housings accommodating first and second spindles 4 and 5, respectively, which are linked to first and second clinching rolls 6 and 7, respectively. Shown off to one side is a nutrunner 8 used for powering the clincher 1.

For causing the moving apart and bringing together of the housings 2 and 3 ( and associated spindles 4 and 5 and rolls 6 and 7) there is provided a lever 9 (shown in two different operating positions in Figure 2), the lowermost region of which is smoothly shaped as a pressing down zone or "skate" 10. This equipment is not described herein in detail as it is fully described in EP-0818278-A.

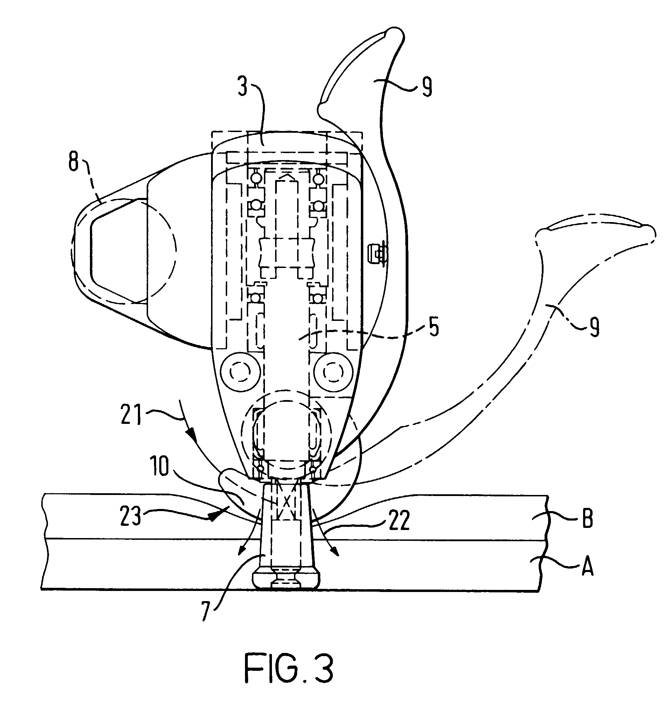

The equipment illustrated in Figures 1 and 2 is modified in Figure 3, in accordance with the present invention. In Figure 3 a air pressure supply line 21 leads compressed air to the region of the skate 10, where it is released in the form of air jets 22 which provide an air cushion 23. This air cushion acts on, and presses downwardly on, a hollow sealing portion B attached to a support portion A of a seal to be fitted to a flange (not shown).

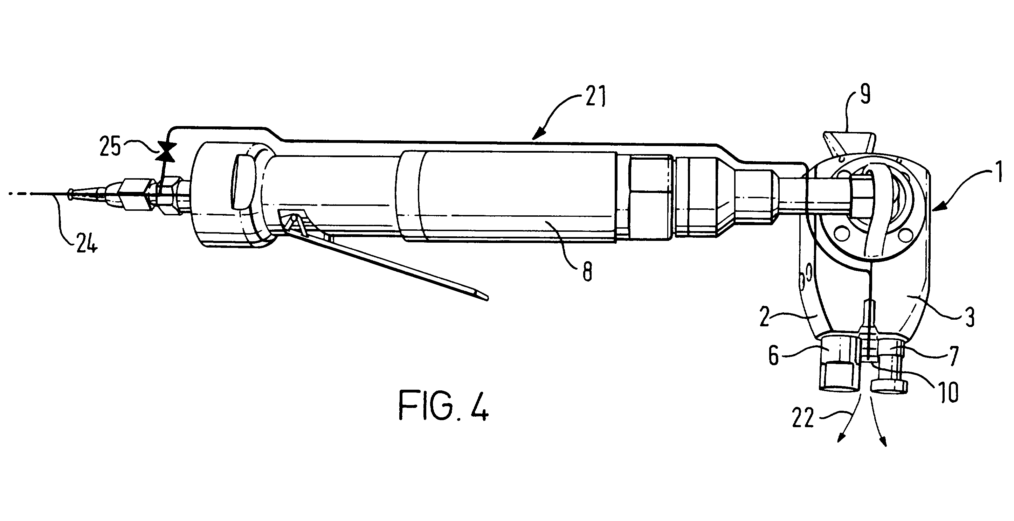

Figure 4 shows a full front view of the apparatus shown in Figure 3. The air pressure supply line 21 communicates with the main air line 24 used to feed the drive motor in the nutrunner 8, the line 24 having a valve 25 in the line 21 just downstream from where it is taken off from the main air line 24.

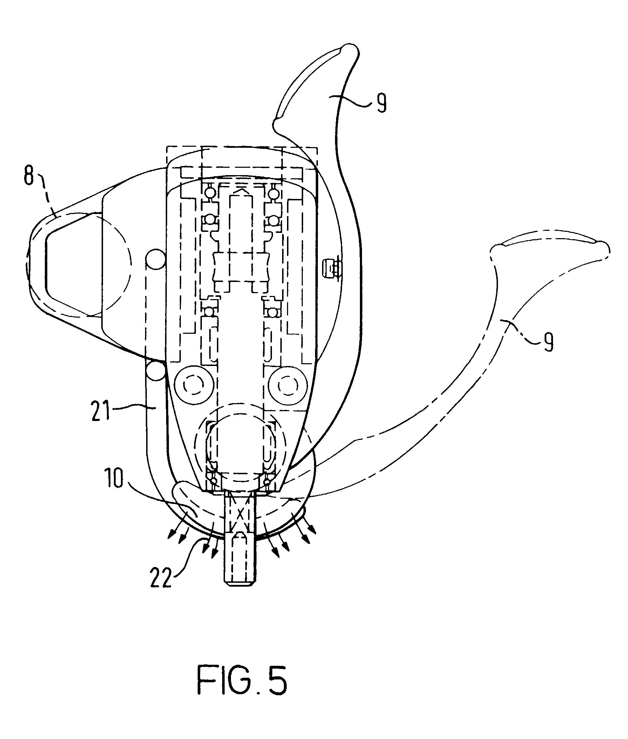

Figure 5 shows in more detail part of the arrangement shown in Figure 1, particularly with regard to the air pressure supply line 21 leading to the skate 10, from which the jets of air 22 emerge.

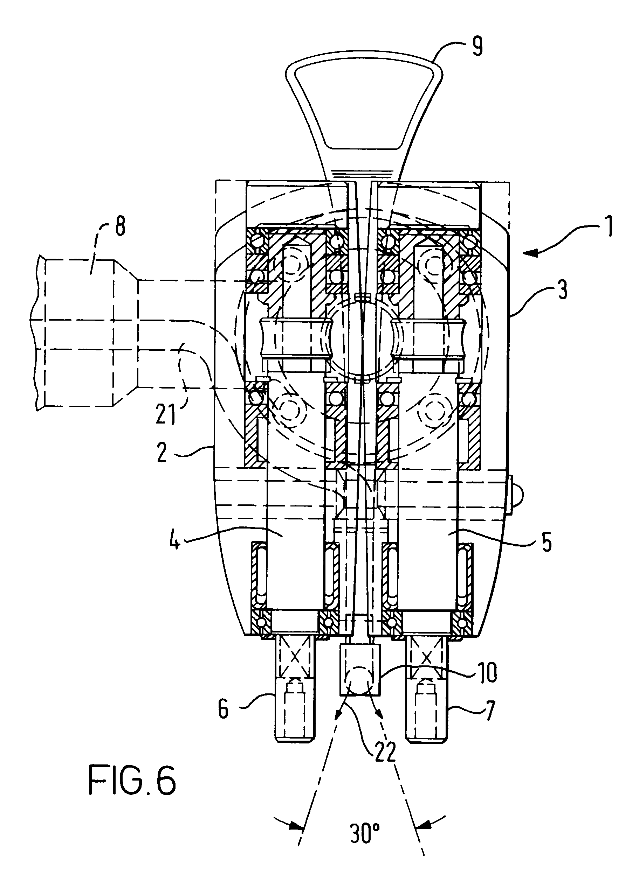

Figure 6, is a view taken at right angles to that of Figure 5 and shows that the compressed air emerging as jets 22 are directed within an arc of about 30°.

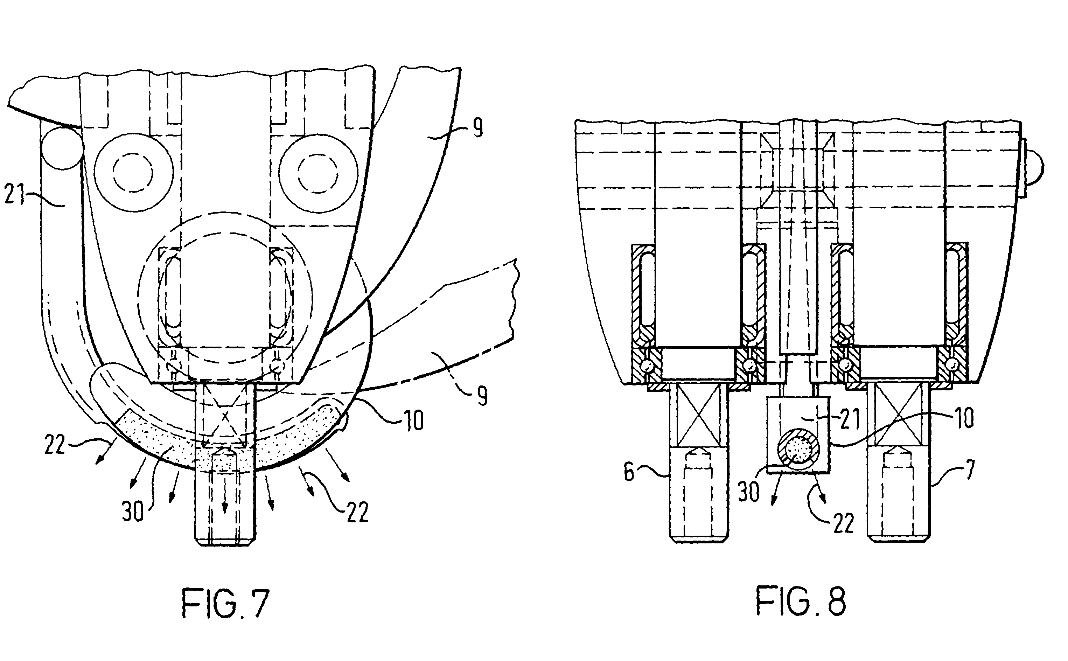

With regard to the variant shown in Figure 7, instead of the compressed air emerging from the skate 10 through discrete orifices, the compressed air is fed to an insert 30 which can take the form of a sintered metal component or a porous rigid plastics material, from which the air can escape in the form of jets 22 to create the air cushion.

Figure 8 shows the arrangement illustrated in Figure 7, taken at 90°.

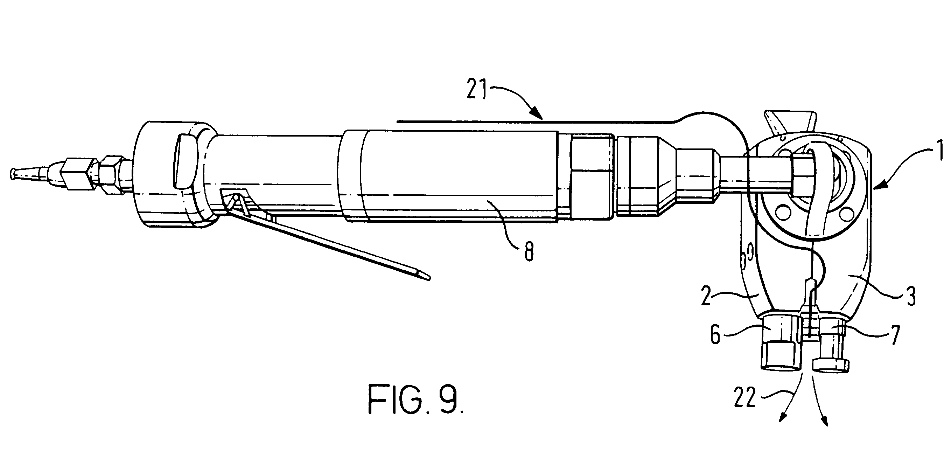

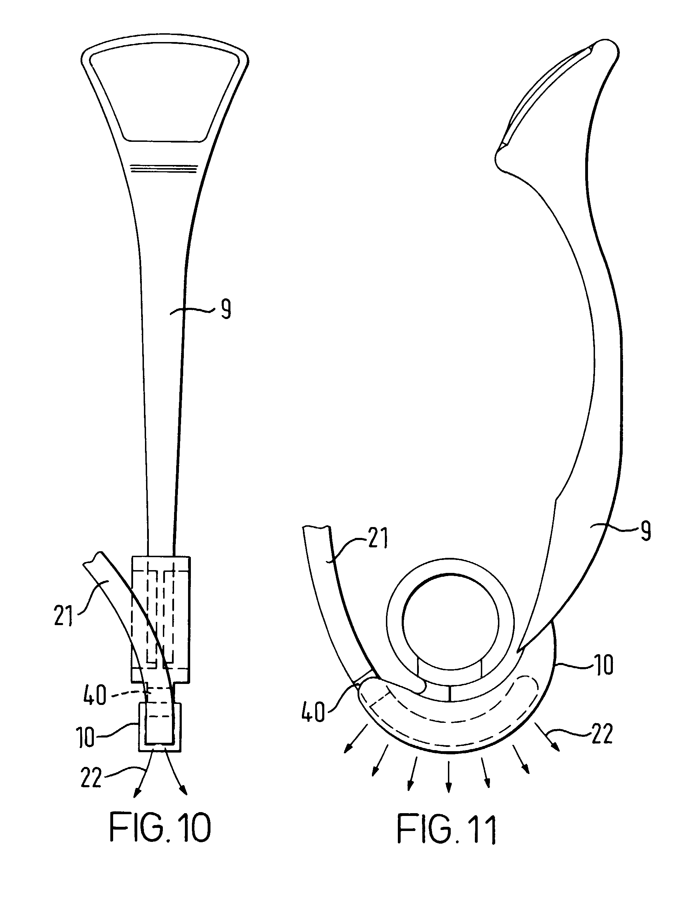

Figure 9 shows a arrangement somewhat similar to the earlier arrangements, but in which the compressed air is free to emerge as jets 22 leaving the contact surface. In the arrangement shown in Figure 9 the compressed air is fed through the air supply line 21 to a connector 40 (shown in Figures 10 and 11) and from there to the skate 10 which causes the compressed air to be emitted as jets necessary to create the air cushion.

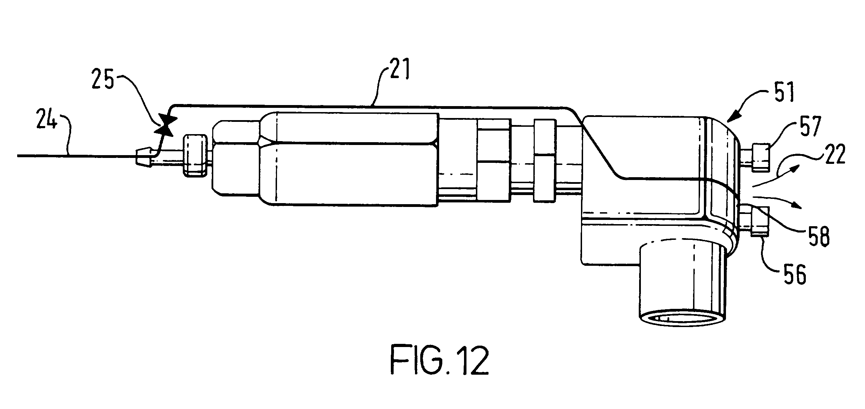

In the alternative embodiment illustrated in Figure 12, a different clincher 51 is shown, which has only a single housing, from which project the two rotatable rolls 56 and 57. Positioned between the rolls 56 and 57 is a smooth underside of the housing 51 which serves as a skate 58 and it is to this skate that the air under pressure is fed through the air pressure supply line 21, it being released in the region of the skate to provide the desired air cushion.

Although mention has been made of the creation of the air jets by means of suitable orifices or apertures, nonetheless the air could be fed into channels which could be parallel to, or perpendicular to, the direction of movement of the apparatus along the seal, with the air under pressure within these channels which open onto the seal enabling the air cushion to be created.

## Claims

1. A clinching device comprising:-
two rotatable clinching rolls capable of acting on opposite sides of a body located between the two rolls;
means for causing rotation of at least one of the two rolls; and
abutment means capable of being urged against the body, in a direction generally parallel to the axes of rotation of the two rolls;
wherein the device also includes air-release means by which air under pressure is releasable in the region of the abutment means to provide in use an air cushion between the abutment means and the body.

2. A clinching device according to claim 1, wherein the clinching rolls are of the fixed variety in which the distance between the axes of rotation is fixed.

3. A clinching device according to claim 1, wherein the clinching rolls are of the variable variety, with the distance between axes of rotation being variable, and wherein the clinching device includes means tending to urge the two rolls towards each other, and the abutment means then acts in a direction generally perpendicular to a line along which the two rolls can be urged towards each other.

4. A clinching device according to any preceding claim, wherein the abutment means is a lower region of a lever for controlling a pair of housings or is a lower region of a housing or pair of housings.

5. A clinching device according to any preceding claim, wherein the means for rotating the two rolls is an air-powered motor which is associated with a compressed air line which conveys compressed air to the air-powered motor.

6. A clinching device according to claim 5, wherein part of the air supplied under pressure to the means for rotating the rolls is taken off and led to the abutment means and allowed to escape in the region of the abutment means in a manner such as to provide the desired air cushion.

7. A clinching device according to claim 6, wherein the abutment means is provided with orifices and wherein in use the compressed air which is led off is allowed to escape through the orifices in the abutment means.

8. A clinching apparatus according to claim 7, wherein the orifices take the form of an air knife in which air is expelled in a form similar to that of a blade; or wherein part of the abutment means has a porous surface or is provided with a porous insert.
